# EUROPEAN PATENT APPLICATION

(11) **EP 2 090 507 A2**
(43) Date of publication of application: **19.08.2009**
(21) Application number: 09001998.5
(22) Date of filing: 13.02.2009
(51) Int. Cl.: B63H 9/04, B63J 3/04, B63H 21/20, B63H 21/22

(54) **Propulsion system**

(30) Priority: 15.02.2008 US 64087 P
(71) Applicant: Glacier Bay, Inc., Union City CA 94587 (US)
(72) Inventor: Alston, Gerald Allen, Union City, CA 94587 (US); Nelson, Bruce, Union City, CA 94587 (US); Dobbs, Justin, Union City, CA 94587 (US)
(74) Representative: Fischer, Uwe

(57) **Abstract**

A system for automatically controlling the speed of a battery powered electric propulsion motor driving a shaft connected to a propeller located on a sailing vessel. The system includes a user interface for selecting either a neutral, a regeneration or a forward thrust operating mode. The system also includes a controller configured to receive input from a motor speed sensor and a motor current sensor. The controller adjust the speed of the motor to the correct motor speed. The controller is configured so that in the neutral mode the correct motor speed is the speed required to substantially eliminate thrust on the shaft.

## Description

### CROSS REFERENCE TO RELATED APPLICATIONS

The present application claims priority to and the benefit of U.S. Provisional Patent Application No. 61/064,087 filed February 15, 2008. The foregoing provisional application is incorporated by reference herein in its entirety.

### BACKGROUND

The present application relates generally to the field of propulsion systems for a sailing vessel. More specifically, the present invention relates to reducing the drag caused by a propeller for a propulsion system of a sailing vessel when the vessel is being propelled by the wind.

Sailing vessels may include an on-board secondary power source such as a diesel engine or a diesel/electric hybrid engine. The secondary power source drives a propeller to provide supplemental propulsion to the vessel. However, when the wind is providing the propulsion for the sailing vessel and the engine is turned off, the propeller creates drag in the water and slows the vessel.

It would be advantageous, amongst other improved features, to provide a system for reducing the drag created by the propeller on a sailing vessel.

### BRIEF DESCRIPTION OF THE DRAWINGS

These and other features, aspects, and advantages of the present invention will become apparent from the following description, appended claims, and the accompanying exemplary embodiments shown in the drawings, which are briefly described below.

Fig. 1 is a block diagram of an electrical system for a sailing vessel according to one exemplary embodiment of the present invention.

Fig. 2 is a block diagram of an electrical system for a sailing vessel according to another exemplary embodiment of the present invention.

Fig. 3 is a flowchart of a process for controlling an electric propulsion motor according to one exemplary embodiment using an algorithm with the motor in a propulsion mode or neutral mode.

Fig. 4 is a flowchart of a process for controlling an electric propulsion motor according to one exemplary embodiment using an algorithm with the motor in a propulsion mode or neutral mode.

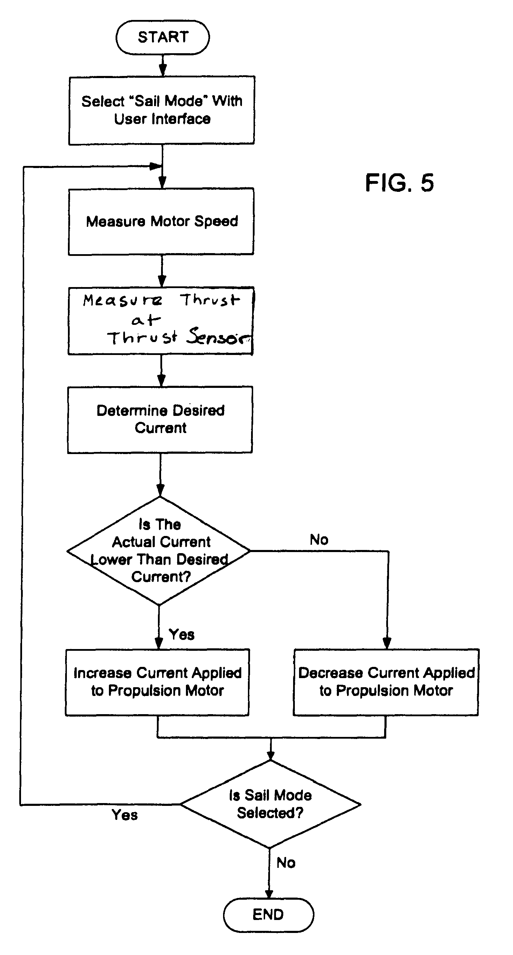

Fig. 5 is a flowchart of a process for controlling an electric propulsion motor according to one exemplary embodiment using sensor to measure thrust pressure with the motor in a propulsion mode or neutral mode.

Fig. 6 is a flowchart of a process for controlling an electric propulsion motor according to one exemplary embodiment using an algorithm with the motor in regeneration mode.

Fig. 7 is a flowchart of a process for controlling an electric propulsion motor according to one exemplary embodiment using an algorithm for maintaining the speed of the vessel over land.

Fig. 8 is an exemplary graph of propeller efficiency and vessel speed.

Fig. 9 is a schematic drawings of a marine vessel including an electric propulsion system.

### DETAILED DESCRIPTION

The present application relates generally to a system for controlling the speed of a propeller on a sailing vessel. The system is configured to run the propeller in a "sail mode" when the boat is under sail power. In this mode, the propeller turns at a relatively low speed to counteract the propeller load or drag applied to the boat as it moves through the water. The "sail mode" improves the efficiency of the boat, reducing the wind power that is needed to counteract the drag of the propeller.

Operating in the propeller in a low drag (e.g., neutral or sail mode) may increase the over-water speed by as much as 3/4 -1 1/2 knots.

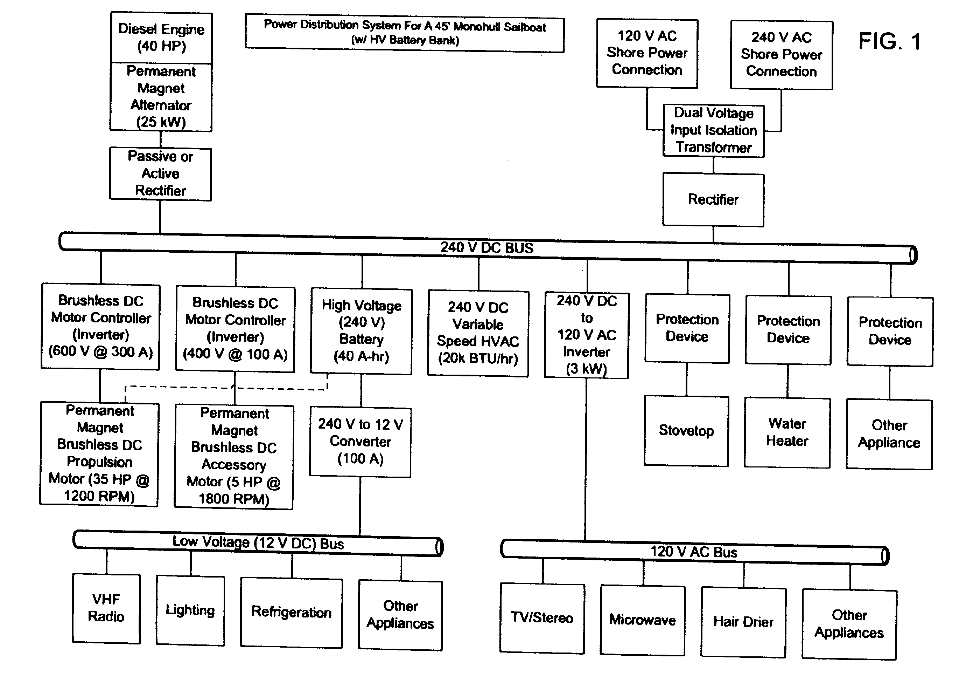

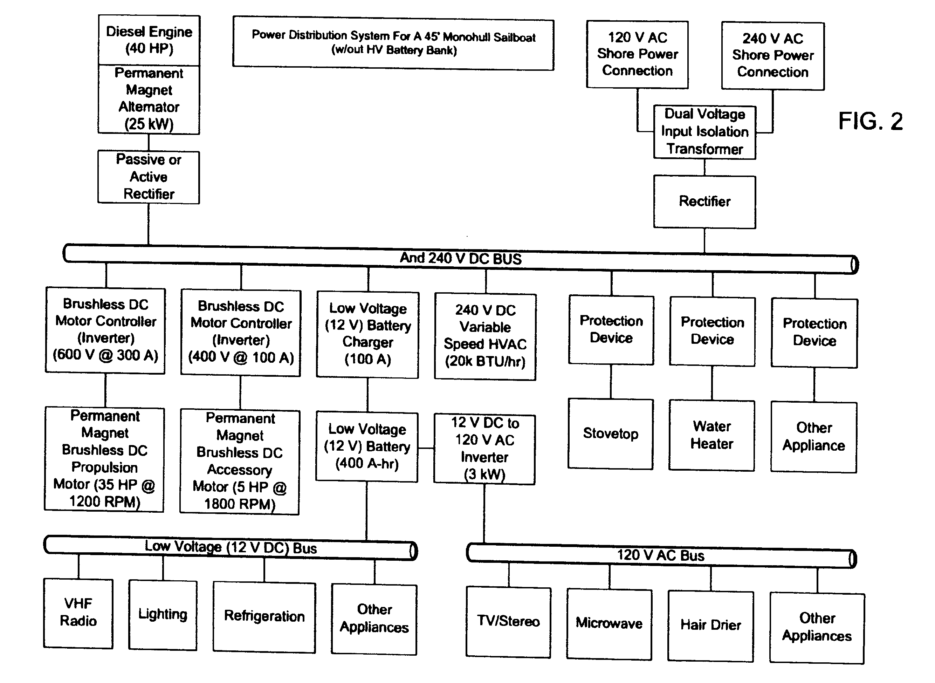

Referring to Figs. 1 and 2, a block diagram of an electrical system for a sailing vessel is shown according to exemplary embodiments. The sailing vessel includes an on-board power source to power a motor-driven propeller. According to an exemplary embodiment, power is supplied by a diesel engine turning a permanent magnet alternator or generator. The alternator powers, for example a 240 V DC bus for the vessel. As shown in Fig. 1, the vessel may include a rechargeable energy source such as a battery bank to store energy from the engine. An electric motor, such as a brushless DC permanent magnet motor is coupled to the bus with a controller and drives a propeller. If the electrical system includes a rechargeable energy source, the motor may receive power from the rechargeable energy source when the engine and generator are secured (i.e., turned off).

The power systems shown in Figs. 1 and 2 are exemplary only. For example, the system may or may not include various electrical loads (e.g., appliances). Furthermore, the system need not include additional electrical busses (e.g., the 12 V DC and 120 V AC busses). Also, although a shore power connection via a rectifier is shown in Figs. 1 and 2, the present application is directed mainly to the operation of the propulsion system when the vessel is underway and shore power is not available.

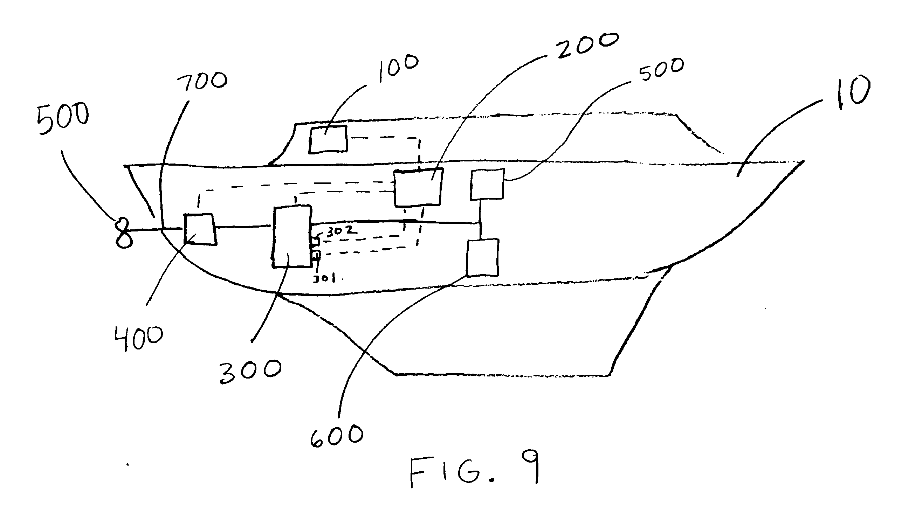

As shown in Fig. 9, according to one exemplary embodiment, the propulsion system for a vessel 10 may include a propulsion motor 300. The propulsion motor drives a propeller 500 via a shaft 700. As shown in Figs. 1 and 2, the motor may derive power from either a generator 500 or a battery 600. The system also includes a system controller 200 for controller the operation of the motor. As shown in Figs. 1 and 2, the motor will also typically include a motor controller. The system may be controlled via inputs entered on a user interface 100. The user interface may take the form of any well known interfaces such as, for example, personal computer, touch screen, joy stick, etc. Furthermore, the controller and the user interface may be integrated such as, for example, in the case of an on board computer system that includes a monitor/touch screen display.

One embodiment of the propulsion system relates to a system for controlling an electric propulsion motor for driving a propeller of a sailing vessel. The system includes a user interface for selecting either a sail mode or a normal operation mode, and a controller configured to operate in the sail mode to control the electric propulsion motor to substantially eliminate the drag force being applied by the propeller to the vessel.

As mentioned above, the sail mode is typically selected via the user interface 100 when the vessel is underway and the primary propulsion power is imparted on the vessel via the vessels sail(s). In the sail mode, the controller 200 adjusts the speed of the motor in order to substantially eliminate the drag force being applied to the propeller 500. The drag force may be determined indirectly by sensing the pressure on the shaft 700 of the vessel 10. When the motor 300 is employed to propel the vessel 10 through the water a thrust force is placed on the vessel by the propeller via the shaft. Typically, when the vessel 10 is driven by sail power the propeller spins and imparts a drag on the vessel causing a force on the shaft in the opposite direction from the forward thrust force. In the sail mode, the controller 200 may adjust the speed of the motor 300 so that the net force on the shaft is substantially zero. The system includes a motor current sensor 301 and a motor speed sensor 302 that, as shown in Fig. 9, provide input to the system controller 200.

The force on the shaft may be determined via a thrust sensor 400. The thrust sensor 400 may sense the pressure on the shaft at a thrust bearing, for example. The thrust sensor 400 may include any of many well known sensor types such as, for example, the sensors disclosed in U.S. Patent Nos. 5,527,194; 6,289,749; 6,418,794; 6,951,145; and 7,469,593; for example. The thrust sensor 400 may include other embodiments operating based on the characteristics disclosed in the foregoing patents, which are incorporated by reference herein. The foregoing patents are exemplary only, the thrust sensor may also employ any well known sensing technique such as, for example, pressure, piezo-electric, magnetic, etc.

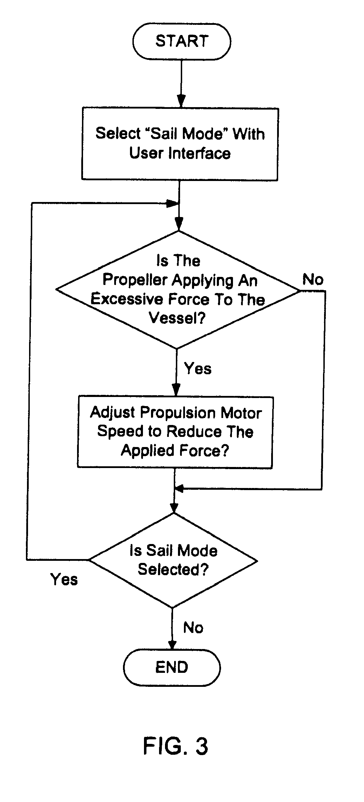

As shown in Fig. 3, the controller may control the system to reduce the applied force on the vessel, i.e. forward or drag thrust. Although Fig. 3, does not show a step for considering a minimum applied force, the system may include a predetermined minimum applied force value so that the controller does not cycle the motor controller and motor speed excessively. For example, if the motor speed is adjusted so that the thrust on the vessel drops below an acceptable predetermined value than the controller can maintain the motor speed constant and no further adjustments are necessary. The predetermined value may be substantially zero or some greater but acceptable value based on system operation and/or, for example, other factors such as, for example, sea state.

As described above, according to a disclosed embodiment, an electric propulsion system for a sailing vessel is provided. The electric propulsion system includes an electric motor driving a propeller, a controller for controlling the operation of the motor, and a user interface for selecting the operating mode of the controller. The operating modes includes a sail mode and a normal mode. The controller is configured to operate in the sail mode to change the speed of the motor in order to substantially eliminate or reduce below a predetermined value the drag force being applied by the propeller to the vessel.

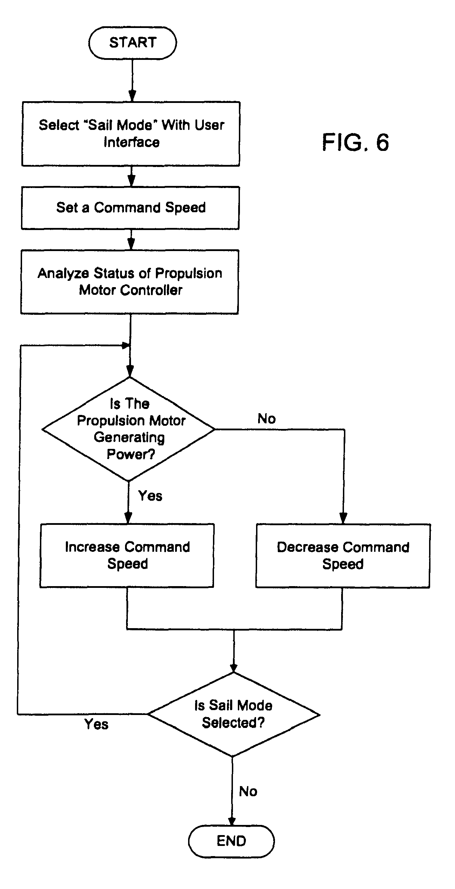

The system may also be controlled by reducing or eliminating the electrical power being generated by the propulsion motor. Thus, as shown in Fig. 6, the controller 200 may adjust the speed of the motor in order to reduce the regenerative power created by the propulsion motor. The controller may operate to adjust the motor speed to maintain the regenerative power around zero (i.e., neutral or no drag force). Although not shown in Fig. 6, the system may include reducing the regenerative power to an acceptable predetermined value and then maintaining the motor current constant. The regenerative power may be measured by any well known method such as a voltage or current sensor, for example.

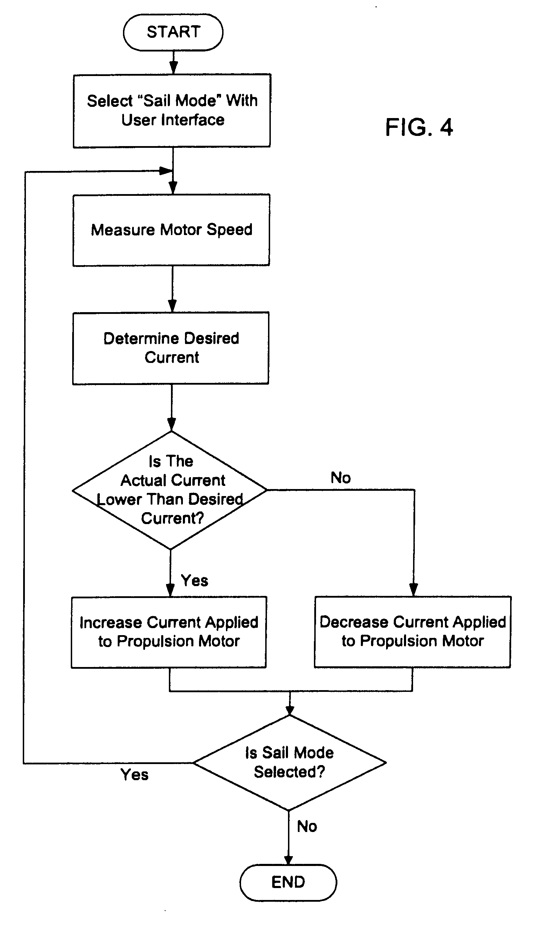

As shown in Fig. 4, the system may employ motor speed and current sensors. The speed of the motor may be controlled based on the sensed motor current. The system controller may employ a method wherein for a given motor speed and corresponding motor current is known (e.g., via a lookup table, learned, or algorithm). Due to the drag force on the vessel, there may be a mismatch between the motor speed and the motor current. Thus, the controller seeks to eliminate the mismatch by adjusting the current applied to the propulsion motor. The controller may operate to adjust the motor current to match the desired current with the actual current (i.e., neutral or no drag force). Although not shown in Fig. 4, the system may include reducing the difference between the actual current and the desired current to an acceptable predetermined value and then maintaining the motor current constant.

As described above, the system may include a sail mode and a normal mode. According to another embodiment, the system may also include a regenerative mode. In particular, a system for automatically controlling the speed of a battery powered electric propulsion motor driving a shaft connected to a propeller located on a sailing vessel may be provided. The system includes a user interface for selecting an operating mode of the system, a motor speed sensor and a motor current sensor, and a controller configured to receive input from the motor speed sensor and the motor current sensor and adjusts the speed of the motor to the correct motor speed. The controller may execute an algorithm to determine the correct motor speed based on the selected operating mode. The operating modes may include neutral, regeneration and forward thrust (or normal) modes. The controller is configured so that in the neutral mode the correct motor speed is the speed required to substantially eliminate thrust on the shaft. The neutral mode may correspond generally to the sail mode described above.

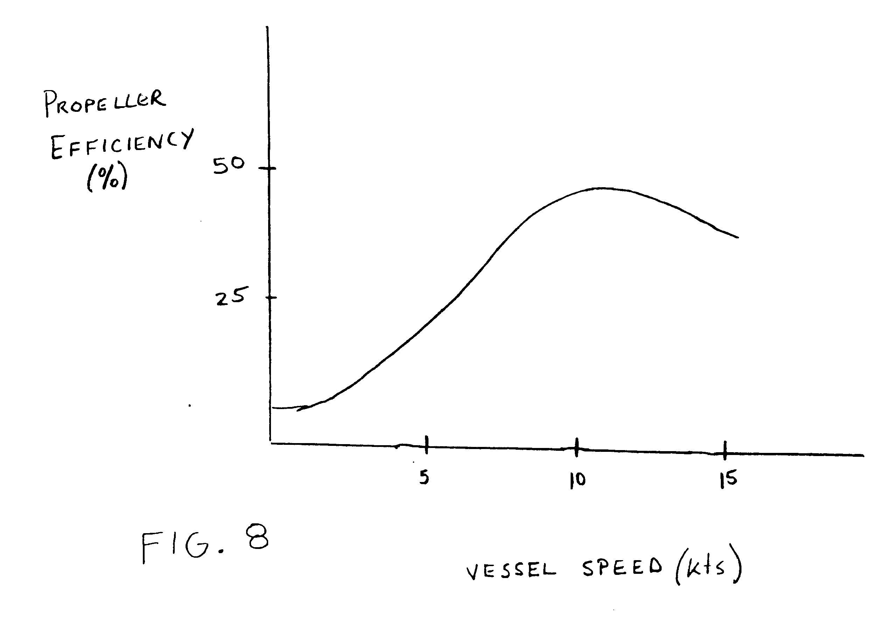

In the regeneration mode, the system controller may operate to adjust the motor current to provide for the motor to generate electrical power, such as, for example to recharge the vessel's battery or batteries. As shown in Fig. 8, the propeller efficiency may vary according to the speed of the vessel. Thus, the system controller may adjust the motor current in order to place the vessel in the optimum condition for generation of electrical power. For example, the system controller may adjust the motor current to counteract the force on the propeller generated by the vessel's movement through the water in order to optimize the efficiency of the power generation. The system includes a controller configured to adjust the motor speed in order to maximize the power generation.

When operating in the regenerative mode, the controller may be configured to adjust the motor speed and current based on different criteria. For example, the controller may adjust the motor current in order to balance power generation with increased drag on the vessel. Thus, the controller may adjust the motor current to limit the power generation in order to avoid exceeding a pre-determined amount of drag force on the vessel. In an alternative embodiment, the controller may adjust the motor current to maximize the power generation regardless of the impact on the drag force on the vessel.

For example, the controller may execute an algorithm to determine the correct motor speed based on the selected operating mode. The user interface is configured so that selection of the regeneration mode includes selecting a desired amount of power generation and wherein the controller is configured so that in the regeneration mode the correct motor speed is the speed required to produce the desired amount of power generation with the minimum amount of thrust on the shaft.

The embodiments disclosed herein can be employed with conventional regenerative capable motor propulsion systems such as disclosed in U.S. Published Patent Application 2006/0175996 (incorporated by reference herein). The motor control methodology and operating modes disclosed herein may be used in the marine propulsions system(s) disclosed in the foregoing patent publication. Thus, the system controller disclosed herein may be used to control the various propulsion systems disclosed in the foregoing publication. The disclosed propulsion system may be modified to accommodate the presently disclosed novel controller. Such modifications may include the provision of a thrust sensor, for example.

When operating in the conventional, normal or forward thrust mode, the controller may be configured to adjust the motor speed and current in order to supply the propulsion power requested on the user interface. The controller may execute an algorithm to determine the correct motor speed based on the selected operating mode. The user interface is configured so that selection of the forward thrust mode includes selecting a desired amount of forward thrust and wherein the controller is configured so that in the forward thrust mode the correct motor speed is the speed required to produce the desired amount of forward thrust on the shaft. The system further includes a thrust or pressure sensor for measuring the forward thrust on the shaft. The user interface is configured to allow the user to select a desired amount of current supplied to the motor and wherein the desired amount of forward thrust is the forward thrust resulting from providing the selected amount of current to the motor.

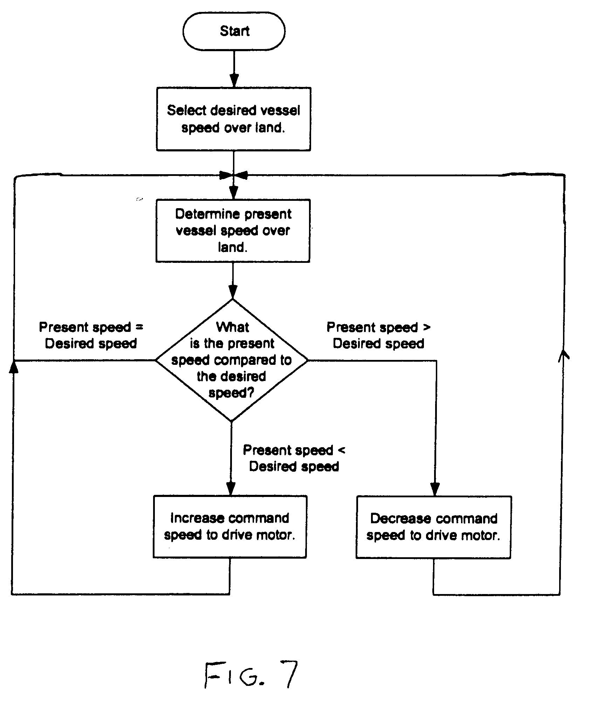

In an alternative embodiment, a user may select a desired speed over land instead of, for example, a desired speed in the water. Thus, according to this embodiment, the controller receives input from a navigation system (e.g., GPS) that provides an indication of the vessel's position relative to land. The controller adjusts the motor current and speed in order to maintain the selected speed over land. The controller operation is disclosed, for example, in Fig. 7.

Another embodiment relates to a system for automatically controlling the speed of a battery powered auxiliary electric propulsion motor located on a sailing vessel. The system includes a user interface for selecting an operating mode of the system, a motor speed sensor and a motor current sensor, and a controller configured to receive input from the motor speed sensor and the motor current sensor and adjusts the speed of the motor to the correct motor speed. The controller executes an algorithm to determine the correct motor speed based on the selected operating mode. The algorithm considers the operating characteristics of the vessel when determining the correct motor speed. The operating modes may be configured to not allow the user to directly select vessel speed or motor speed. One or more aspects of the algorithm may be user selectable (e.g., from a lookup table), pre-programmed (e.g., a formula), or calculated (e.g., with a learning function to determine certain operating characteristics of the vessel). The operating characteristics may include, for example, the relative drag force imparted on the vessel at various vessel speeds by the shape of the hull. Further by way of example, the operating characteristics may be related to the efficiency of the propeller.

The system for controlling the speed of the motor and propeller may comprise discrete modes or may comprise a continuous range. For example, a system may include three separate modes (e.g., a normal operation mode where the propeller propels the vessel, a neutral or sail mode where the propeller turns at a slow speed to minimize the drag applied to the vessel, and a regeneration mode where the propeller is driven by the current to recharge the rechargeable energy source with the motor acting as a generator). According to another exemplary embodiment, a system may include intermediate modes between the three "main" modes. For example, the system may include a minor propulsion mode where the propeller turns at a speed between the normal operation mode and the neutral mode and propels the vessel while using less power. The system may also include a minor regeneration mode where the propeller is allowed to be driven by the current to provide a smaller amount of power to the rechargeable energy source. Such a minor regeneration mode may be configured as an optimized regeneration mode where the speed of the propeller and, thus, the motor is adjusted so it is in the most efficient range for the motor to act as a generator. According to still another exemplary embodiment, the system may be configured to operate the propeller in a continuous range between a normal operation mode, a neutral or sail mode, and a regeneration mode.

It is important to note that the construction and arrangement of the system for controlling the speed of the motor and propeller as shown in the various exemplary embodiments is illustrative only. Although only a few embodiments of the present application have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the application. For example, elements shown as integrally formed may be constructed of multiple parts or elements, the position of elements may be reversed or otherwise varied, and the nature or number of discrete elements or positions may be altered or varied. Accordingly, all such modifications are intended to be included within the scope of the present application. The order or sequence of any process or method steps may be varied or re-sequenced according to alternative embodiments. Any means-plus-function clause is intended to cover the structures described herein as performing the recited function and not only structural equivalents but also equivalent structures. Other substitutions, modifications, changes and omissions may be made in the design, operating conditions and arrangement of the exemplary embodiments without departing from the scope of the present application.

As noted above, embodiments within the scope of the present application include program products comprising machine-readable media for carrying or having machine-executable instructions or data structures stored thereon. Such machine-readable media can be any available media which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store a desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions comprise, for example, instructions and data which cause a general purpose computer, special purpose computer, or special purpose processing machines to perform a certain function or group of functions.

It should be noted that although the diagrams herein may show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the application. Likewise, software implementations of the present application could be accomplished with standard programming techniques with rule-based logic and other logic to accomplish the various connection steps, processing steps, comparison steps and decision steps.

The foregoing description of embodiments of the application has been presented for purposes of illustration and description. It is not intended to be exhaustive or to limit the application to the precise form disclosed, and modifications and variations are possible in light of the above teachings, or may be acquired from practice of the application. The embodiments were chosen and described in order to explain the principles of the application and its practical application to enable one skilled in the art to utilize the application in various embodiments and with various modifications as are suited to the particular use contemplated.

Although the description contains many specificities, these specificities are utilized to illustrate some of the preferred embodiments of this application and should not be construed as limiting the scope of the application. The scope of this application fully encompasses other embodiments which may become apparent to those skilled in the art. All structural, chemical, and functional equivalents to the elements of the above-described application that are known to those of ordinary skill in the art are expressly incorporated herein by reference and are intended to be encompassed by the present application. A reference to an element in the singular is not intended to mean one and only one, unless explicitly so stated, but rather it should be construed to mean at least one. Furthermore, no element, component or method step in the present disclosure is intended to be dedicated to the public.

## Claims

1. A system for controlling an electric propulsion motor for driving a propeller of a sailing vessel, the system comprising:
a user interface for selecting either a sail mode or a normal operation mode;
a controller configured to operate in the sail mode to control the electric propulsion motor to substantially eliminate the drag force being applied by the propeller to the vessel.

2. A system for automatically controlling the speed of a battery powered electric propulsion motor driving a shaft connected to a propeller located on a sailing vessel comprising:
a user interface for selecting an operating mode of the system;
a motor speed sensor;
a controller configured to receive input from the motor speed sensor and adjusts the speed of the motor to the correct motor speed; and
wherein the controller executes an algorithm to determine the correct motor speed based on the selected operating mode.
wherein the operating modes include neutral, regeneration and forward thrust modes;
wherein the controller is configured so that in the neutral mode the correct motor speed is the speed required to substantially eliminate thrust on the shaft.

3. The system of claim 2, wherein the system is configured so that selection of the regeneration mode includes selecting a desired amount of power generation and wherein the controller is configured so that in the regeneration mode the correct motor speed is the speed required to produce the desired amount of power generation with the minimum amount of thrust on the shaft.

4. The system of claim 2, wherein the system is configured so that when the regeneration mode is selected the controller is configured to adjust the motor speed to produce the maximum amount of power generation without exceeding a maximum amount of drag.

5. The system of claim 2, wherein system is configured so that when the forward thrust mode is selected the user interface permits the selection of a minimum transit speed of the vessel and the controller operates to adjust the motor speed to so that the minimum transit speed is achieved.

6. The system of claim 2, wherein the system is configured so that when the forward thrust mode is selected the user interface permits the selection of an additional power boost and the motor speed is controlled based on the amount of power boost selected.

7. The system of claim 6, wherein the controller adjusts the motor speed based on both the power boost selected and the remaining capacity of the battery.

8. The system of claim 6, wherein user interface permits selection of the duration of the voyage and the controller adjust the motor speed based on both the power boost selected and the duration of the voyage selected by the user.

9. The system of claim 2, wherein the system is configured so that selection of the forward thrust mode includes selecting a desired amount of forward thrust and wherein the controller is configured so that in the forward thrust mode the correct motor speed is the speed required to produce the desired amount of forward thrust on the shaft.

10. The system of claim 2, wherein the controller adjusts the motor speed by adjusting a current to the motor.

11. The system of claim 9, further comprising a pressure sensor for measuring the forward thrust on the shaft.

12. The system of claim 9, wherein the system is configured so that when the desired amount of thrust is selected the controller determines a corresponding amount of current to be supplied to the motor.

13. A system for automatically controlling the speed of a battery powered electric propulsion motor located on a sailing vessel comprising:
a user interface for selecting an operating mode of the system;
a motor speed sensor;
a controller configured to receive input from the motor speed sensor and adjusts the speed of the motor to the correct motor speed; and
wherein the controller executes an algorithm to determine the correct motor speed based on the selected operating mode.

14. The system of claim 13, wherein the algorithm considers the operating characteristics of the vessel when determining the correct motor speed.

15. The system of claim 13, wherein the system is configured so that the user interface does not permit the user to directly select vessel speed or motor speed

16. The system of claim 13, wherein the algorithm includes a learning function to determine certain operating characteristics of the vessel.

17. The system of claim 13, further comprising a motor current sensor and wherein the controller is configured to receive input from the motor current sensor and wherein the controller adjusts the motor current in order to control the motor speed.

18. A system for automatically controlling the speed of a battery powered electric propulsion motor driving a shaft connected to a propeller located on a sailing vessel comprising:
a user interface for selecting transit speed for the vessel;
a motor speed sensor and a motor current sensor;
a controller configured to receive input from the motor speed sensor and the motor current sensor and adjusts the speed of the motor to the correct motor speed; and
wherein the controller executes an algorithm to determine the operating mode necessary to achieve the selected transit speed;
wherein the operating modes include regeneration and forward thrust modes;
wherein the controller is configured to shift the motor between the regeneration and forward thrust modes as necessary to maintain the selected transit speed.
